# EUROPÄISCHE PATENTSCHRIFT

(11) **EP 2 323 886 B1**
(45) Veröffentlichungstag und Bekanntmachung des Hinweises auf die Patenterteilung: **02.04.2014**
(21) Anmeldenummer: 09775615.9
(22) Anmeldetag: 27.08.2009
(51) Int. Cl.: B61F 15/20, B61L 25/02, B61D 43/00

(54) **RADSATZLAGERGEHÄUSE MIT POSITIONSERFASSUNGSEINRICHTUNG FÜR SCHIENENFAHRZEUG UND DAMIT AUSGESTATTETES SCHIENENFAHRZEUG**
WHEELSET BEARING HOUSING HAVING A POSITION DETECTION DEVICE FOR A RAIL VEHICLE AND RAIL VEHICLE EQUIPPED THEREWITH
CORPS DE BOÎTE D'ESSIEU COMPRENANT UN DISPOSITIF DE DÉTECTION DE POSITION POUR VÉHICULE FERROVIAIRE ET VÉHICULE FERROVIAIRE ÉQUIPÉ DE CE CORPS

(30) Priorität: 15.09.2008 AT 14332008
(43) Veröffentlichungstag der Anmeldung: 25.05.2011
(73) Patentinhaber: PJ Messtechnik GmbH, 8020 Graz (AT)
(72) Erfinder: ZELLER, Reinhard, A-8504 Hengstberg (AT); PETSCHNIG, Günter, A-8010 Graz (AT); JOCH, Martin, A-8045 Graz (AT)
(74) Vertreter: Margotti, Herwig Franz
(86) Internationale Anmeldenummer: PCT/AT2009/000333
(87) Internationale Veröffentlichungsnummer: WO 2010/028417

(56) Entgegenhaltungen:
- EP-A1- 1 674 371
- WO-A1-2006/032307
- DE-A1-102006 005 597
- DE-U1- 20 202 536
- US-A1- 2007 208 841

## Beschreibung

Die Erfindung betrifft ein Radsatzlagergehäuse für ein Schienenfahrzeug sowie ein damit ausgestattetes Schienenfahrzeug.

Ein Radsatzlagergehäuse für ein Schienenfahrzeug ist aus US-A-2007/208841 und DE-A-10 2006 005 597 bekannt.

Obwohl der Schienenverkehr in den meisten Staaten stark reglementiert ist und Eisenbahnnetze einer genauen Sicherung unterliegen, muss alljährlich ein erstaunlich hohes Verschwinden von Schienenfahrzeugen, insbesondere Güterwaggons, registriert werden, das überwiegend auf Diebstahl dieser Fahrzeuge zurückzuführen ist. Der dadurch entstehende wirtschaftliche Schaden ist enorm.

Es hat sich weiterhin gezeigt, dass in manchen Eisenbahnnetzen aufgrund von schlechter Logistik Güterwaggons oftmals "Irrfahrten" unternehmen oder lange Zeit in Verschubbahnhöfen stehen, bevor sie endlich mit großer Verspätung an den Bestimmungsort transportiert werden.

Es wäre daher wünschenswert, Schienenfahrzeuge mit einer verlässlichen Positionserfassungseinrichtung versehen zu können, um die Position der Schienenfahrzeuge online oder zumindest zeitnahe erfassen zu können und damit rasch auf Abweichungen von der vorhergesehenen Route oder zeitliche Abweichungen vom Fahrplan reagieren zu können, um so entweder Diebstähle rechtzeitig zu verhindern, oder gestohlene Fahrzeuge wieder zu beschaffen, oder in das Logistik-System eingreifen zu können, falls ungewöhnliche Verspätungen auffallen. Da speziell Güterwaggons zwischenstaatlich weite Strecken zurücklegen, muss die Positionserfassungseinrichtung für den Weitverkehr geeignet sein, vor Schmutz und Wettereinflüssen geschützt sein und weitgehend wartungsfrei arbeiten. Die Positionserfassungseinrichtung sollte weiters möglichst unauffällig am Schienenfahrzeug angebracht sein, damit potentielle Diebe sie nicht einfach entfernen oder zerstören können. Es wäre weiters auch wünschenswert, unterschiedliche Typen an bereits vorhandenen Schienenfahrzeugen mit einer solchen Positionserfassungseinrichtung nachrüsten zu können.

Der vorliegenden Erfindung liegt die Aufgabe zugrunde, eine Lösung für die oben erläuterten Probleme vorzuschlagen.

Die Erfindung löst die gestellte Aufgabe durch Bereitstellen eines Radsatzlagergehäuses für ein Schienenfahrzeug mit den kennzeichnenden Merkmalen des Anspruchs 1. Vorteilhafte Ausgestaltungen der Erfindung sind in den Unteransprüchen dargelegt.

Der Einbau einer Positionserfassungseinrichtung in ein Radsatzlagergehäuse für ein Schienenfahrzeug bietet die folgenden Vorteile:
- Alle herkömmlichen Schienenfahrzeuge sind mit Radsatzlagergehäusen ausgestattet, so dass auch bestehende Schienenfahrzeuge mit der Positionserfassungseinrichtung nachgerüstet werden können.
- Radsatzlagergehäuse weisen einen ausreichend großen Innenraum auf, um die Positionserfassungseinrichtung einbauen zu können.
- Der Innenraum eines Radsatzlagergehäuses ist gegenüber Schmutz und Umwelteinflüssen abdichtbar.
- Das Radsatzlagergehäuse bietet massiven Schutz gegenüber mutwilliger Zerstörung der Positionserfassungseinrichtung oder Diebstahl.
- Dass eine Positionserfassungseinrichtung in einem Radsatzlagergehäuse eingebaut ist, ist von außen kaum oder gar nicht sichtbar, so dass Diebe die Positionserfassungseinrichtung nicht bemerken werden.

In einer für den Weitverkehr geeigneten Ausführungsform der Erfindung umfasst die Positionserfassungseinrichtung einen, vorzugsweise satellitengestützten, FunkPositionserfassungsempfänger, einen Funksender, der die vom Funk-Positionserfassungsempfänger gelieferten Positionsdaten an einen entfernten Server sendet, und eine Stromversorgungseinheit zur Versorgung der Positionserfassungseinrichtung mit elektrischer Energie.

Der Funk-Positionserfassungsempfänger arbeitet vorzugsweise mit Satellitenunterstützung, beispielsweise nach dem amerikanischen GPS-Standard oder dem europäischen Galileo-Standard und ist somit weltweit einsetzbar, wobei eine hohe Präzision der erfassten Position gewährleistet ist.

Der Funksender ist so ausgelegt, dass er eine ausreichend große Reichweite besitzt, um jederzeit Positionsdaten an einen entfernten Server senden zu können. In einer bevorzugten Ausgestaltung arbeitet der Funksender gemäß einem mobilen Telefonstandard, beispielsweise auf der Basis eines GSM-Netzwerks. Damit ist beinahe weltweite Verfügbarkeit der Positionsdaten garantiert.

Der Server speichert die empfangenen Positionsdaten unter Zuordnung zu einem bestimmten Schienenfahrzeug und ermöglicht jederzeit die Abfrage und Auswertung der Daten, sei es, um bloß die aktuelle Position des Schienenfahrzeugs festzustellen, oder um den Routenverlauf zu ermitteln oder die Transportzeiten festzustellen. Alle Positions- und Zeitdaten können mit Sollwerten verglichen werden und bei Überschreiten von Abweichungstoleranzen Alarme ausgelöst werden.

Um die im Inneren des Radsatzlagergehäuses angeordnete Positionserfassungseinrichtung autark mit elektrischer Energie zu versorgen, ist in einer besonders bevorzugten Ausgestaltung der Erfindung vorgesehen, dass die Stromversorgungseinheit einen elektrischen Generator mit einem Rotor und einem Stator aufweist, wobei der Rotor von einer Radsatzwelle antreibbar ist. Die Radsatzwelle erstreckt sich ins Innere des Radsatzlagergehäuses und dreht sich mit einem Rad des Schienenfahrzeugs mit, wenn dieses in Bewegung ist. Die Rotationskraft der Radsatzwelle wird somit zum Betrieb des elektrischen Generators genutzt. In einer besonders platzsparenden Ausführungsform ist der Rotor an der Radsatzwelle montiert. Einfache und platzsparende Montage des Generators im Inneren des Radsatzlagergehäuses wird erzielt, wenn der Stator an einer der Radsatzwelle zugewandten Seite eines Deckels des Radsatzlagergehäuses montiert ist. Dabei wird zweckmäßig der Stator am Deckel vormontiert und anschließend der Deckel in definierter Lage auf das Radsatzlagergehäuse aufgesetzt, wodurch der Stator in definierter Lage in Bezug auf den Rotor positioniert wird. Hohen Wirkungsgrad und kleine Bauweise erreicht man, wenn der elektrische Generator als lagerloser Nabengenerator ausgebildet ist.

Damit die Positionserfassungseinrichtung auch bei Stillstand des Schienenfahrzeugs mit elektrischer Energie versorgt wird, ist in einer weiteren Ausführungsform der Erfindung eine, vorzugsweise wiederaufladbare, Batterie vorgesehen. Die Erfindung sieht weiters einen elektronischen Regler vor, der die vom elektrischen Generator gelieferte elektrische Energie für die Versorgung der Positionserfassungseinrichtung regelt und/oder den Ladestrom für die Batterie regelt. Man schützt dadurch die Positionserfassungseinrichtung vor Über- oder Unterspannung und regelt den Ladestrom für die Batterie, so dass sich ein optimaler Ladeverlauf einstellt, wodurch die Lebensdauer der Batterie maximiert wird.

Um eine gute Sende- und Empfangsleistung der Positionserfassungseinrichtung sicherzustellen, ist weiters vorgesehen, dass eine Antenne des FunkPositionserfassungsempfängers und eine Antenne des Funksenders an der Außenseite des Deckels des Radsatzlagergehäuses montiert sind. Anschlussleitungen verbinden die Antennen durch den Deckel hindurch mit dem Positionserfassungsempfänger bzw. dem Funksender, wobei der Durchgang für die Anschlussleitungen abgedichtet ist.

Ein Schienenfahrzeug, das mit einem Radsatzlagergehäuse gemäß der Erfindung ausgerüstet ist, bietet hervorragenden Diebstahlschutz und Nachverfolgbarkeit seiner Bewegungen.

Die Erfindung wird nun anhand eines nicht einschränkenden Ausführungsbeispiels unter Bezugnahme auf die Zeichnungen näher beschrieben. In den Zeichnungen zeigen
Fig. 1 ein Blockschaltbild der in der Erfindung verwendeten Positionserfassungseinrichtung;
Fig. 2 einen Querschnitt durch ein mit einer Positionserfassungseinrichtung ausgerüstetes Radsatzlagergehäuse gemäß der Erfindung.

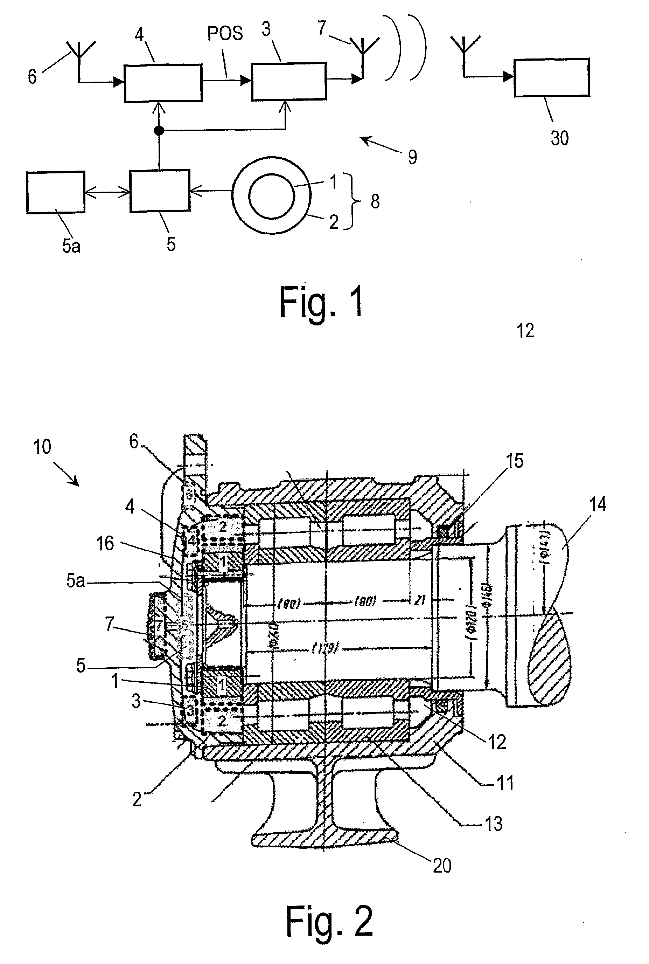

Unter Bezugnahme auf Fig. 1 wird zunächst der elektrische Aufbau einer in der Erfindung bevorzugt verwendeten Positionserfassungseinrichtung 9 erläutert. Die Positionserfassungseinrichtung 9 umfasst einen Funk-Positionserfassungsempfänger 4 mit einer Antenne 6 zum Empfang von Satelliten-Signalen nach dem GPS- oder zukünftig Galileo-Standard. Aus den Satelliten-Signalen ermittelt der Funk-Positionserfassungsempfänger 4 ständig bzw. in regelmäßigen Zeitabständen die Koordinaten POS der aktuellen Position und gibt sie an einen Funksender 3 weiter. Im vorliegenden Ausführungsbeispiel ist der Funksender 3 als Funktelefon-Modem ausgebildet und übermittelt die Koordinaten POS an einen entfernten Server 30. Der Server 30 ist beispielsweise dazu eingerichtet, die Positionen der von ihm überwachten Schienenfahrzeuge den zugelassenen Anwendern im Internet zur Verfügung zu stellen. Der Positionserfassungsempfänger 4 und der Funksender 3 werden von einer Stromversorgungseinheit mit elektrischer Energie versorgt. Die Stromversorgungseinheit umfasst einen als lagerlosen Nabengenerator ausgebildeten elektrischen Generator 8, der einen Stator 2 und einen Rotor 1 umfasst. Weiters ist eine wiederaufladbare Batterie 5a vorgesehen. Ein elektronischer Regler 5 regelt die vom elektrischen Generator 8 gelieferte elektrische Energie für die Versorgung des Positionserfassungsempfängers 4 und des Funksenders sowie den Ladestrom für die Batterie 5a.

Anhand der Schnittdarstellung von Fig. 2 wird nun die Integration der Positionserfassungseinrichtung 9 in ein Radsatzlagergehäuse 10 eines Schienenfahrzeugs erläutert. Das Radsatzlagergehäuse 10 ist Teil des Schienenfahrzeugs 20, wie z.B. eines Güterwaggons, wobei in Fig. 2 das Schienenfahrzeug 20 durch einen Träger eines Drehgestells des Schienenfahrzeugs 20 symbolisiert ist. Abgesehen vom erfindungsgemäßen Radsatzlagergehäuse 10 kann das Schienenfahrzeug 20 ein Standardfahrzeug sein und bedarf für den Fachmann daher keiner näheren Erläuterung oder Darstellung. Das Radsatzlagergehäuse 10 umfasst einen ungefähr zylindrischen Körper 11, der einen Innenraum 12 definiert, in dem ein Wälzlager 13 angeordnet ist. Der Körper 11 ist an seinen beiden Enden mit Öffnungen versehen, wobei sich durch eine Öffnung hindurch eine Radsatzwelle 14 in den Innenraum 12 erstreckt und im Wälzlager 13 drehbar gelagert ist. Eine um die Radsatzwelle 14 umlaufende Dichtung 15 verhindert das Eindringen von Schmutz und Nässe in den Innenraum 12. Die gegenüberliegende, in Bezug auf das Schienenfahrzeug 20 außen gelegene Öffnung des Körpers 11 wird durch einen abnehmbaren Deckel 16 verschlossen.

Die Bestandteile der Positionserfassungseinrichtung 9 sind im Innenraum 12 des Radsatzlagergehäuses 10 eingebaut. Genauer gesagt, ist der ringförmige Rotor 1 des nabenlosen elektrischen Generators 8 koaxial an die Radsatzwelle 14 angeflanscht und dreht sich gemeinsam mit ihr. Der ringförmige Stator 2 umgibt den Rotor 1 und ist im Deckel 16 des Radsatzlagergehäuses 10 eingebaut. Bei Bewegung des Schienenfahrzeugs 20 erzeugt der Generator 8 ausreichend elektrische Energie, um die gesamte Positionserfassungseinrichtung 9 autark mit elektrischer Energie zu versorgen. Weiters sind an der Innenseite des Deckels 16 des Radsatzlagergehäuses 10 aufladbare Batterien 5a, der elektronische Regler 5, der Funksender 3, z.B. in Form eines GSM-Modems und der Funk-Positionserfassungsempfänger 4 positioniert. An der Außenseite des Deckels 16 des Radsatzlagergehäuses 10 sind die Antenne 7 für den Funksender 3 und die Antenne 6 für den Funk-Positionserfassungsempfänger 4 positioniert. Die Antennen 7, 6 sind durch nicht dargestellte Anschlussleitungen, die durch den Deckel 16 hindurchführen, mit dem Funksender 3 bzw. dem Funk-Positionserfassungsempfänger 4 verbunden. Somit ist die gesamte Positionserfassungseinrichtung 9 sicher im Innenraum 12 des Radsatzlagergehäuses 10 integriert. Sie fällt von außen nicht auf, ist durch das Radsatzlagergehäuse 10 optimal geschützt, wird autark mit elektrischer Energie versorgt und kann auch nachträglich in herkömmliche Radsatzlagergehäuse 10 eingebaut werden.

## Patentansprüche

1. Radsatzlagergehäuse (10) für ein Schienenfahrzeug, wobei das Radsatzlagergehäuse an dem Schienenfahrzeug (20) drehfest befestigbar ist und eine Positionserfassungseinrichtung (9) aufweist, wobei die Positionserfassungseinrichtung (9) einen, vorzugsweise satellitengestützten, Funk-Positionserfassungsempfänger (4), einen Funksender (3), der die vom Funk-Positionserfassungsempfänger gelieferten Positionsdaten an einen entfernten Server (30) sendet, und eine Stromversorgungseinheit zur Versorgung der Positionserfassungseinrichtung (9) mit elektrischer Energie aufweist, **dadurch gekennzeichnet, dass** die Positionserfassungseinrichtung (9) im Inneren des Radsatzlagergehäuses eingebaut ist.

2. Radsatzlagergehäuse nach Anspruch 1, **dadurch gekennzeichnet, dass** die Stromversorgungseinheit einen elektrischen Generator (8) mit einem Rotor (1) und einem Stator (2) aufweist, wobei der Rotor (1) von einer im Radsatzlagergehäuse (10) drehbar gelagerten Radsatzwelle (14) antreibbar ist.

3. Radsatzlagergehäuse nach Anspruch 2, **dadurch gekennzeichnet, dass** der Rotor (1) an der Radsatzwelle (14) montiert ist.

4. Radsatzlagergehäuse nach Anspruch 2 oder 3, **dadurch gekennzeichnet, dass** der Stator (2) an einer der Radsatzwelle (14) zugewandten Seite eines Deckels (16) des Radsatzlagergehäuses montiert ist.

5. Radsatzlagergehäuse nach einem der Ansprüche 2 bis 4, **dadurch gekennzeichnet, dass** der elektrische Generator (8) als lagerloser Nabengenerator ausgebildet ist.

6. Radsatzlagergehäuse nach einem der Ansprüche 1 bis 5, **dadurch gekennzeichnet, dass** die Stromversorgungseinheit eine, vorzugsweise wiederaufladbare, Batterie (5a) umfasst.

7. Radsatzlagergehäuse nach einem der Ansprüche 1 bis 6, **gekennzeichnet durch** einen elektronischen Regler (5), der die vom elektrischen Generator (8) gelieferte elektrische Energie für die Versorgung der Positionserfassungseinrichtung (9) regelt und/oder den Ladestrom für die Batterie (5a) regelt.

8. Radsatzlagergehäuse nach einem der Ansprüche 1 bis 7, **dadurch gekennzeichnet, dass** eine Antenne (6) des Funk-Positionserfassungsempfängers (4) und eine Antenne (7) des Funksenders (3) an der Außenseite des Deckels (16) des Radsatzlagergehäuses montiert sind.

9. Schienenfahrzeug (20), **gekennzeichnet durch** zumindest ein Radsatzlagergehäuse (10) nach einem der vorhergehenden Ansprüche.

## Claims

1. A wheel-set bearing housing (10) for a rail vehicle, wherein the wheel-set bearing housing is attached at the rail vehicle (20) in a non-rotatable manner and comprises a position detection device (9), wherein the position detection device (9) comprises a, preferably satellite-based, radio position detection receiver (4), a radio transmitter (3) which transmits the position data provided by said radio position detection receiver to a remote server (30), and a current supply unit for supplying electric energy to said position detection device (9), **characterized in that** the position detection device (9) is built-in inside the wheel-set bearing housing.

2. The wheel-set bearing housing according to claim 1, **characterised in that** said current supply unit comprises an electric generator (8) having a rotor (1) and a stator (2), said rotor (1) being drivable by a wheel-set shaft (14) which is rotatably supported in the wheel-set bearing housing (10).

3. The wheel-set bearing housing according to claim 2, **characterised in that** said rotor (1) is fixed to said wheel-set shaft (14).

4. The wheel-set bearing housing according to claim 2 or 3, **characterised in that** said stator (2) is fixed to a side of a cover (16) of the wheel-set bearing housing which faces the wheel-set shaft (14).

5. The wheel-set bearing housing according to any one of the claims 2 to 4, **characterised in that** said electric generator (8) is a hub generator without a bearing.

6. The wheel-set bearing housing according to any one of the claims 1 to 5, **characterised in that** the current supply unit comprises a, preferably rechargeable, battery (5a).

7. The wheel-set bearing housing according to any one of the claims 1 to 6, **characterised by** an electronic control (5) regulating the electric energy supplied by the electric generator (8) to the position detection device (9) and/or the charging current for the battery (5a).

8. The wheel-set bearing housing according to any one of the claims 1 to 7, **characterised in that** an antenna (6) of the radio position detection receiver (4) and an antenna (7) of the radio transmitter (3) are fixed to the outside of the cover (16) of the wheel-set bearing housing.

9. A rail vehicle (20) **characterised by** at least one wheel-set bearing housing (10) according to any one of the preceding claims.

## Revendications

1. Boîtier de palier d'essieu (10) pour un véhicule ferroviaire, dans lequel le boîtier de palier d'essieu est susceptible d'être fixé solidaire en rotation sur le véhicule ferroviaire (20) et comprend un moyen de détection de position (9), dans lequel le moyen de détection de position (9) comprend un récepteur radio de détection de position (4), de préférence assisté par satellite, un émetteur radio (3) qui émet les données de position fournies par le récepteur radio de détection de position vers un serveur (30) à distance, et une unité d'alimentation électrique pour alimenter le moyen de détection de position (9) en énergie électrique, **caractérisé en ce que** le moyen de détection de position (9) est intégré dans le boîtier de palier d'essieu.

2. Boîtier de palier d'essieu selon la revendication 1, **caractérisé en ce que** l'unité d'alimentation électrique comprend un générateur électrique (8) avec un rotor (1) et un stator (2), dans lequel le rotor (1) est susceptible d'être entraîné par un arbre d'essieu (14) monté en rotation dans le boîtier de palier d'essieu (10).

3. Boîtier de palier d'essieu selon la revendication 2, **caractérisé en ce que** le rotor (1) est monté sur l'arbre d'essieu (14).

4. Boîtier de palier d'essieu selon la revendication 2 ou 3, **caractérisé en ce que** le stator (2) est monté sur un côté, tourné vers l'arbre d'essieu (14), d'un couvercle (16) du boîtier de palier d'essieu.

5. Boîtier de palier d'essieu selon l'une des revendications 2 à 4, **caractérisé en ce que** le générateur électrique (8) est réalisé sous forme de générateur-moyeu sans palier.

6. Boîtier de palier d'essieu selon l'une des revendications 1 à 5, **caractérisé en ce que** l'unité d'alimentation électrique comprend une batterie (5a), de préférence rechargeable.

7. Boîtier de palier d'essieu selon l'une des revendications 1 à 6, **caractérisé par** un régulateur électronique (5), qui régule l'énergie électrique fournie par le générateur électrique (8) pour l'alimentation du moyen de détection de position (9) et/ou qui régule le courant de charge pour la batterie (5a).

8. Boîtier de palier d'essieu selon l'une des revendications 1 à 7, **caractérisé en ce qu'**une antenne (6) du récepteur radio de détection de position (4) et une antenne (7) de l'émetteur radio (3) sont montées sur la face extérieure du couvercle (16) du boîtier de palier d'essieu.

9. Véhicule ferroviaire (20), **caractérisé par** au moins un boîtier de palier d'essieu (10) selon l'une des revendications précédentes.
